# EUROPEAN PATENT APPLICATION

(11) **EP 3 502 180 A1**
(43) Date of publication of application: **26.06.2019**
(21) Application number: 18212172.3
(22) Date of filing: 13.12.2018
(51) Int. Cl.: C08L 33/12

(54) **POLYMETHACRYLATE COMPOSITION AND OPTICAL DEVICE MADE THEREFROM, AND DISPLAY APPARATUS**

(30) Priority: 19.12.2017 TW 10644655; 05.12.2018 TW 10743616
(71) Applicant: Chi Mei Corporation, Tainan City 71702 (TW)
(72) Inventor: KAO, Yi-Huei, 71702 Tainan City (TW); HSIEH, Shang-Ju, 71702 Tainan City (TW)
(74) Representative: Becker Kurig Straus

(57) **Abstract**

A polymethacrylate composition, an optical device made therefrom, and a display apparatus are provided. The polymethacrylate composition includes 50 to 85 parts by weight of methacrylate series polymer, and 15 to 50 parts by weight of styrene series-maleic anhydride series copolymer. The methacrylate series polymer includes methacrylate series monomer unit and acrylate series monomer unit and has a weight average molecular weight (Mw) in a range between 20,000 and 200,000. A range of molecular weight distribution index (PDI) of the styrene series-maleic anhydride series copolymer is from 1.5 to 2.05. The styrene series-maleic anhydride series copolymer includes 76.5wt%-90wt% of styrene series monomer unit, 10wt%-23.5wt% of maleic anhydride series monomer unit, and 0-13.5wt% of second copolymerizable monomer unit.

## Description

### BACKGROUND OF THE INVENTION

### 1. Field of the Invention

The present disclosure relates to a polymer composition, particularly to a polymethacrylate composition and an optical device made therefrom, and a display apparatus.

### 2. Description of Related Art

Polymethacrylate is a widely used polymer that has been well evaluated in terms of processability, physical properties and mechanical properties, has equivalent transmittance to glass and favorable appearance of the molded article, thus, has become one of the most excellent polymer transparent materials at present, and is often applied to various optical devices or consumer products such as camera lenses, lenses, optical films, car taillights, billboards, etc.

In recent years, with the development of thin lightweight notebook computers, the requirements for thinning and high performance of optical devices in display devices such as liquid crystal display devices have also increased. In addition, with the wider application environment of the liquid crystal display devices, optical devices are also required to have durability properties such as heat resistance in a high-temperature environment and moisture resistance in a high-humidity environment.

Therefore, additives, which can improve the heat resistance, are currently added to polymethacrylate, but it has been found that such changes affect the optical properties of polymethacrylate.

### SUMMARY

The present disclosure provides a polymethacrylate composition, an optical device made from the composition, which can both have heat resistance and optical properties of the polymethacrylate composition, and a display apparatus comprising the optical device.

The polymethacrylate composition of the present disclosure includes 50 to 85 parts by weight of methacrylate series polymer and 15 to 50 parts by weight of styrene series-maleic anhydride series copolymer. The methacrylate series polymer includes methacrylate series monomer unit and acrylate series monomer unit and has a weight average molecular weight (Mw) in a range between 20,000 and 200,000. A range of molecular weight distribution index (PDI) of the styrene series-maleic anhydride series copolymer is from 1.5 to 2.05. The styrene series-maleic anhydride series copolymer includes 76.5wt%-90wt% of styrene series monomer unit, 10wt%-23.5wt% of maleic anhydride series monomer unit, and 0-13.5wt% of second copolymerizable monomer unit.

In an embodiment of the present disclosure, the methacrylate series polymer includes 92wt%-99wt% of the methacrylate series monomer unit, lwt%-8wt% of the acrylate series monomer unit, and 0-7wt% of first copolymerizable monomer unit, and a weight average molecular weight (Mw) of the methacrylate series polymer is between 50,000 and 150,000.

In an embodiment of the present disclosure, the first copolymerizable monomer unit is at least one selected from a group consisting of unsaturated carboxylic series monomer unit, maleimide series monomer unit, propenyl-containing compound monomer unit, vinyl-containing compound monomer unit, and styrene series monomer unit.

In an embodiment of the present disclosure, the ratio of the weight percentage of the styrene series monomer unit to the weight percentage of the maleic anhydride series monomer unit in the styrene series-maleic anhydride series copolymer is between 3 and 9.2.

In an embodiment of the present disclosure, a weight average molecular weight (Mw) of the styrene series-maleic anhydride series copolymer is between 60,000 and 100,000.

In an embodiment of the present disclosure, the second copolymerizable monomer unit is at least one selected from a group consisting of methyl methacrylate monomer unit, ethyl methacrylate monomer unit, propyl methacrylate monomer unit, n-butyl methacrylate monomer unit, amyl methacrylate monomer unit, cyclohexyl methacrylate monomer unit, heptyl methacrylate monomer unit, n-octyl methacrylate monomer unit, octadecyl methacrylate monomer unit, phenyl methacrylate monomer unit, benzyl methacrylate monomer unit, 2-ethylhexyl methacrylate monomer unit, methyl acrylate monomer unit, ethyl acrylate monomer unit, propyl acrylate monomer unit, butyl acrylate monomer unit, amyl acrylate monomer unit, n-hexyl acrylate monomer unit, cyclohexyl acrylate monomer unit, heptyl acrylate monomer unit, dodecyl acrylate monomer unit, phenyl acrylate monomer unit, benzyl acrylate monomer unit, 2-ethylhexyl acrylate monomer unit, and octadecyl acrylate monomer unit.

In an embodiment of the present disclosure, the polymethacrylate composition further includes 200 ppm -900 ppm of an organophosphorus compound.

In an embodiment of the present disclosure, the polymethacrylate composition further includes an antioxidant, and a content ratio of the antioxidant to the organophosphorus compound is within 1.1-10.

In an embodiment of the present disclosure, the polymethacrylate composition further includes 500 ppm-2,000 ppm of an antioxidant.

In an embodiment of the present disclosure, the polymethacrylate composition further includes 500 ppm-2,000 ppm of a thermal stabilizer.

In an embodiment of the present disclosure, the polymethacrylate composition further includes 10,000 ppm-50,000 ppm of an UV absorber, and a flash point of the UV absorber is 240°C or higher.

In an embodiment of the present disclosure, the UV absorber is selected from at least one of a group consisting of 2-(4,6-bis-(2,4-dimethylphenyl)-1,3,5-triazin-2-yl)-5-(octyloxy)phenol, 2,2'-methylenebis[6-(benzotriazol-2-yl)-4-tert-octylphenol], 2-(4,6-diphenyl-1,3,5-triazin-2-yl)-5-[(hexyl)oxy]-phenol, 2,2',4,4'-tetrahydroxybenzophenone, 3-[(2-Cyano-3,3-diphenylacryloyl)oxy]-2,2-bis{[(2-cyano-3,3-diphenylacryloyl)oxy] methyl}propyl 2-cyano-3,3- diphenylacrylate (uvinul 3030), 2-(2H-benzo Triazol-2-yl)-6-dodecyl-4-methylphenol, and 2-(2'-hydroxy-3',5'-dipentylphenyl)benzotriazole.

The optical device of the present disclosure is made from the above-mentioned polymethacrylate composition.

In an embodiment of the present disclosure, the optical device is at least one selected from the group consisting of an optical plate, an optical sheet, and an optical film.

The display apparatus of the present disclosure comprises the optical device. The display apparatus is at least one selected from the group consisting of a television, a digital camera, a digital photo frame, a mobile phone, a notebook personal computer, a mobile computer, a monitor used in a computer, a portable game console, a portable information terminal, an audio reproduction apparatus, a game console, and a car display.

Based on the above, the polymethacrylate composition of the present disclosure has a specific composition and ratio, thus it can have heat resistance, thermal stability, and optical properties. Therefore, it can be applied to optical devices and has excellent optical properties of low haze and low yellow index. The display apparatus having above optical device is also excellent in display effect.

In order to make the aforementioned and other objectives and advantages of the present disclosure comprehensible, embodiments are described in detail below.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1A is a cross-sectional schematic of an optical device according to one embodiment of the disclosure.
FIG. 1B is a cross-sectional schematic of an optical device according to another embodiment of the disclosure.
FIGs. 2A to 2E are schematic views of display apparatus according to some embodiment of the disclosure.

### DESCRIPTION OF THE EMBODIMENTS

Hereinafter, embodiments of the present disclosure will be described in detail. However, these embodiments are exemplary, and the disclosure of the present disclosure is not limited thereto.

In an embodiment of the present disclosure, the polymethacrylate composition includes 50 to 85 parts by weight of methacrylate series polymer and 15 to 50 parts by weight of styrene series-maleic anhydride series copolymer. The methacrylate series polymer includes methacrylate series monomer unit and acrylate series monomer unit. A weight average molecular weight (Mw) of the methacrylate series polymer is in a range between 20,000 and 200,000. The styrene series-maleic anhydride series copolymer includes 76.5wt%-90wt% of styrene series monomer unit, 10wt%-23.5wt% of maleic anhydride series monomer unit, and 0-13.5wt% of second copolymerizable monomer unit. A range of molecular weight distribution index (PDI) of the styrene series-maleic anhydride series copolymer is from 1.5 to 2.05.

In another embodiment of the present disclosure, except for above components, the polymethacrylate composition further includes 200ppm-900ppm of an organophosphorus compound.

### Methacrylate series polymer

The methacrylate series polymer is mainly polymerized from a monomer mixture mainly composed of methacrylate series monomers. In an embodiment, the methacrylate series polymer is polymerized from a mixture containing methacrylate series monomer and acrylate series monomer; and preferably, the methacrylate series polymer is polymerized from a mixture containing methacrylate series monomer, acrylate series monomer and first copolymerizable monomer.

The methacrylate series monomers include, but are not limited to: methyl methacrylate, ethyl methacrylate, propyl methacrylate, n-butyl methacrylate, amyl methacrylate, cyclohexyl methacrylate, heptyl methacrylate, n-octyl methacrylate, octadecyl methacrylate, phenyl methacrylate, benzyl methacrylate, 2-ethylhexyl methacrylate, etc., and the above-mentioned monomers can be used alone or in combination.

The acrylate series monomers include, but are not limited to: methyl acrylate, ethyl acrylate, propyl acrylate, butyl acrylate, amyl acrylate, n-hexyl acrylate, cyclohexyl acrylate, heptyl acrylate, dodecyl acrylate, phenyl acrylate, benzyl acrylate, 2-ethylhexyl acrylate, octadecyl acrylate, etc. The above-mentioned monomers can be used alone or in combination.

The first copolymerizable monomers include, but are not limited to: (1) unsaturated carboxylic acid series monomer, for example but not limited to acrylic acid, methacrylic acid, maleic acid, itaconic acid, citraconic acid, aconitic acid, etc.; (2) maleimide series monomer, for example but not limited to maleimide, N-methylmaleimide, N-isopropylmaleimide, N-butylmaleimide, N-hexylmaleimide, N-octylmaleimide, N-dodecylmaleimide, N-cyclohexylmaleimide, N-phenylmaleimide, N-2,3-tolylmaleimide, N-2,4-tolylmaleimide, N-2,3-ethylphenylmaleimide, N-2,4-ethylphenylmaleimide, N-2,3-butylphenylmaleimide, N-2,4-butylphenylmaleimide, N-2,6-tolylmaleimide, N-2,3-chlorophenylmaleimide, N-2,4-chlorophenylmaleimide, N-2,3-bromophenylmaleimide, N-2,4-bromophenylmaleimide, etc.; (3) propenyl-containing compound monomer, for example but not limited to acrylamide, acrylonitrile, α-methacrylonitrile, allyl glycidyl ether, or glycidyl (meth)acrylate; (4) vinyl-containing compound monomer, for example but not limited to vinyl acetate or chloroethene; and (5) styrene series monomer, for example but not limited to styrene, 2-chlorostyrene, 4-chlorostyrene, bromostyrene, vinyl toluene, α-methylstyrene, p-tert-butylstyrene, p-methylstyrene, o-methylstyrene, m-methylstyrene, 2,4-dimethylstyrene, ethylstyrene, etc. The above-mentioned monomers can be used alone or in combination.

In an embodiment, the methacrylate series polymer includes the methacrylate series monomer unit, the acrylate series monomer unit, and the first copolymerizable monomer unit. The term "monomer unit" as used herein refers to a repetitive structure formed by the polymerization reaction of the aforementioned methacrylate series monomer, acrylate series monomer, or first copolymerizable monomer.

In an embodiment, the methacrylate series polymer includes 92wt%-99wt% of the methacrylate series monomer unit and lwt%-8wt% of the acrylate series monomer unit. Besides, based on the total weight of the methacrylate series polymer, the methacrylate series polymer may further include 0-7wt% of the first copolymerizable monomer unit according to needs.

In an embodiment, a weight average molecular weight (Mw) of the methacrylate series polymer is in a range between 20,000 and 200,000, such as between 50,000 and 150,000 or 60,000 and 140,000; and preferably, between 90,000 and 130,000.

The methacrylate series polymer may be prepared by using a solution or bulk polymerization method, and it is preferable to perform a polymerization reaction in the presence of a solvent in order to prevent the polymerization reaction from being difficult to control due to an increase in the viscosity of the crude polymer. The viscosity of the methacrylate series polymer is usually expressed in terms of solid content, and the amount of solvent must be adjusted so that the solid content of the crude polymer is less than 50wt%, or preferably less than 40wt%.

If the boiling point of the solvent is similar to the boiling point of the main monomer to be polymerized, the mixture of the solvent and the monomer will have a relatively narrow boiling point range, thereby reducing the chance of mixing contaminants in the recycled mixture, and thus the step of intermediate fractionation on the recycled monomer and solvent mixture can be omitted. For example, a solvent having a boiling point close to that of the methacrylate series monomer may be selected; preferably, the solvent has a boiling point of 40°C to 225°C, and more preferably 60°C to 150°C. Specific examples of the above-mentioned solvent include, but are not limited to: hexane, heptane, octane, benzene, toluene, p-xylene, o-xylene, m-xylene, ethylbenzene, cyclohexane, cyclodecane, isooctane, or various low-boiling hydrocarbon or aromatic hydrocarbon solvents. The above-mentioned solvents can be used alone or in combination.

The polymerization reaction of the methacrylate series polymer is initiated by a radical initiator. The radical initiator is not particularly limited, specific examples include but are not limited to: (1) azo compounds: for example 2,2'-azobis-(isobutyronitrile) (AIBN for short), 2,2'-azobis-(2-methylbutyronitrile) (AMBN for short), 2,2'-azobis-(2,4-dimethylvaleronitrile) (ADVN for short), etc.; (2) diacyl peroxides compounds: for example dilauroyl peroxide, decanoyl peroxide, dibenzoyl peroxide (BPO for short), etc.; (3) dialkyl peroxides compounds: for example 2,5-dimethyl-2,5-di-(t-butylperoxy) hexane, dicumyl peroxide, 1,3-bis-(t-butyl peroxy isopropyl)benzene, etc.; (4) peroxyesters compounds: for example t-butylperoxypivalate, 2,5-dimethyl-2,5-di(2-ethyl hexanoylperoxy) hexane, etc.; (5) peroxycarbonates compounds: for example tert-amylperoxy 2-ethylhexyl carbonate, tert-butylperoxy 2-ethylhexyl carbonate, etc.; (6) peroxydicarbonates compounds: for example dimyristyl peroxydicarbonate, di(4-tert-butylcyclohexyl peroxydicarbonate), etc.; (7) peroxyketal compounds: for example 1,1-di(tert-butylperoxy)-3,3,5-trimethylcyclohexane, 2,2-di(4,4-di(tert-butylperoxy) cyclohexyl)propane, etc.; (8) hydroperoxides compounds: for example t-butyl hydroperoxide, isopropylcumyl hydroperoxide, etc.; and (9) others: 2,3-dimethyl-2,3-diphenyl-butane, potassium persulfate, sodium persulfate, ammonium persulfate, etc. In an embodiment, the radical initiator is 2,2'-azobis-(isobutyronitrile). Based on 100 parts by weight of the total amount of the monomer mixture fed, the amount of the radical initiator may be 0.01 to 1 part by weight, such as 0.03 to 0.5 part by weight or 0.07 to 0.1 part by weight.

The polymerization reaction for preparing the methacrylate series polymer can be performed at normal temperature, but the reaction system can be heated to increase the polymerization speed. The reaction temperature is generally about 5°C to 200°C, such as 20°C to 130°C or 30°C to 100°C. During the polymerization process, a chain transfer agent can be added according to needs to facilitate the control of molecular weight; the chain transfer agent is, for example but not limited to: n-dodecyl mercaptan (NDM for short), stearyl mercaptan, t-dodecyl mercaptan (TDM for short), n-propyl mercaptan, n-octyl mercaptan, t-octyl mercaptan, t-nonyl mercaptan, terpinolene, etc.

### Styrene series-maleic anhydride series copolymer (SMA)

The styrene series-maleic anhydride series copolymer is any polymer obtained by copolymerization of styrene series monomer (SM), maleic anhydride series monomer (MAh), and a second copolymerizable monomer, such as linear or branched random copolymer, linear or branched block copolymer, or mixtures thereof.

In an embodiment, a styrene series-maleic anhydride series copolymer is formed by polymerizing a mixture containing styrene series monomer, maleic anhydride series monomer, and a second copolymerizable monomer.

The above-mentioned maleic anhydride series monomer can be used alone or in combination. The maleic anhydride series monomer is, for example but not limited to, maleic anhydride, itaconic anhydride, citraconic anhydride, aconitic anhydride, etc. In an embodiment, the maleic anhydride series monomer is the maleic anhydride.

The styrene series monomer can be used alone or in combination, and the styrene series monomer is, for example but not limited to, styrene, (1) halogen-substituted styrene, for example but not limited to, 2-chlorostyrene, 4-chlorostyrene, bromostyrene, etc.; and (2) alkyl-substituted styrene, for example but not limited to, vinyl toluene, α-methylstyrene, p-tert-butylstyrene, p-methylstyrene, o-methylstyrene, m-methylstyrene, 2,4-dimethylstyrene, ethylstyrene, etc. In an embodiment, the styrene series monomer is at least one selected from a group consisting of styrene, halogen-substituted styrene and alkyl-substituted styrene. In an embodiment, the styrene series monomer is at least one selected from a group consisting of styrene and α-methylstyrene.

The second copolymerizable monomer can be used alone or in combination, and the second copolymerizable monomer is, for example but not limited to, selected from one of groups consisting of the methacrylate series monomer and the acrylate series monomer for the methacrylate series polymer, and thus will not be further described.

In an embodiment, the styrene series-maleic anhydride series copolymer includes styrene series monomer unit, maleic anhydride series monomer unit, and second copolymerizable monomer unit. The term "monomer unit" as used herein refers to a repetitive structure formed by the polymerization reaction of the aforementioned styrene series monomer, maleic anhydride series monomer, or second copolymerizable monomer. Therefore, the styrene series monomer unit is from the above-mentioned styrene series monomer, the maleic anhydride series monomer unit is from the above-mentioned maleic anhydride series monomer, and the second copolymerizable monomer unit is from the above-mentioned second copolymerizable monomer.

In an embodiment, the styrene series-maleic anhydride series copolymer includes 76.5wt%-90wt% of styrene series monomer unit, 10wt%-23.5wt% of maleic anhydride series monomer unit, and 0-13.5wt% of second copolymerizable monomer unit.

In another embodiment, in the styrene series-maleic anhydride series copolymer, the content of the styrene series monomer unit is 76.5wt%- 90wt%, such as 76.8wt%-85wt% or 76.8wt%-84.10wt%. When the content of the styrene series monomer unit is higher than 76.5wt%, the polymethacrylate composition having the styrene series-maleic anhydride series copolymer with such a styrene series monomer unit content has favorable transmittance (T%), haze (HAZE) and yellow index (YI); and when the content of the styrene series monomer unit is lower than 90wt%, the content of the maleic anhydride series monomer unit in the styrene series-maleic anhydride series copolymer is higher than 10wt%, and therefore, the polymethacrylate composition containing such styrene series-maleic anhydride series copolymer may have favorable heat resistance (glass transition temperature, Tg).

In an embodiment, in the styrene series-maleic anhydride series copolymer, the content of the styrene series monomer unit is 76.8wt% to 83wt%, and the content of the maleic anhydride series monomer unit is 17wt% to 23.2wt%. The polymethacrylate composition having the styrene series-maleic anhydride series copolymer having above ratio is more applicable to optical devices having high heat resistance requirements. In an embodiment, the styrene series-maleic anhydride series copolymer having above ratio has a molecular weight distribution index (PDI) ranging from 1.5 to 2.05, and thus it can further have high heat resistance performance on the premise of maintaining favorable transmittance (T%), haze (HAZE) and yellow index (YI).

In an embodiment, in the styrene series-maleic anhydride series copolymer, the ratio in the weight percentages of the styrene series monomer unit to the maleic anhydride series monomer unit is between 3 and 9.2, such as between 3.2 and 8 or between 3.2 and 7.

In an embodiment, a weight average molecular weight (Mw) of the styrene series-maleic anhydride series copolymer is between 60,000 and 100,000, such as between 65,000 and 95,000 or between 65,000 and 90,000.

In an embodiment, a number average molecular weight (Mn) of the styrene series-maleic anhydride series copolymer is between 30,000 and 55,000, such as between 35000 and 50,000 or between 37,000 and 48,000.

In an embodiment, a molecular weight distribution index (PDI) of the styrene series-maleic anhydride series copolymer is 1.5 to 2.05, such as 1.7 to 2.0 or 1.7 to 1.9. If the molecular weight distribution index (PDI) of the styrene series-maleic anhydride series copolymer is greater than 2.05, the optical properties (low haze and low yellow index) of the polymethacrylate composition containing the same would be deteriorated.

The polymerization method of the styrene series-maleic anhydride series copolymer is not particularly limited, and it may be radical polymerization using a radical initiator. If using the treatment of suspension polymerization or emulsion polymerization, sometimes sufficient transparency cannot be obtained. The radical initiator used is, for example but not limited to, selected from the above-mentioned radical initiator for the methacrylate series polymer, and will not be further described.

Based on total 100 parts by weight of the monomers, the amount of the radical initiator is preferably 0.001 to 5 parts by weight. A small amount of solvent may also be used for polymerization. The solvent is, for example but not limited to, aliphatic hydrocarbons such as butane, pentane, hexane, isopentane, heptane, octane, isooctane, etc.; alicyclic hydrocarbons such as cyclopentane, methylcyclopentane, cyclohexane, methylcyclohexane, ethylcyclohexane, etc.; aromatic hydrocarbons such as benzene, toluene, ethylbenzene, xylene, etc. In addition, a known molecular weight modifier, such as 4-methyl-2,4-diphenylpent-1-ene, t-dodecylmercaptan, n-dodecylmercaptan, etc., may be added during the polymerization. The polymerization temperature is preferably 80°C to 170°C, and more preferably 100°C to 160°C.

### Organophosphorus compound

In an embodiment, an organophosphorus compound is provided to avoid that the styrene series-maleic anhydride series copolymer undergoes maleic anhydride ring opening in a high temperature process to change the components of the polymethacrylate composition resulting in the effects to the heat resistance of the composition (Tg dropping), thermal stability (Td dropping), and optical properties (haze and yellow index).

The organophosphorus compound is an aromatic compound having a phosphite group. The organophosphorus compound is, for example but not limited to, tris(2,4-di-t-butylphenyl)phosphite, bis[2,4-di(1,1-dimethylethyl)-6-methylphenyl]ethyl phosphite, tetra (2,4-di-t-butylphenol)-4,4'-biphenyldiphosphite, bis(2,4-di-t-butylphenyl) pentaerythritol diphosphite, bis(2,6-di-t-butyl-4-methylphenyl) pentaerythritol-diphosphite, bis(2,4-dicumylphenyl)pentaerythritol diphosphite, di-t-butyl m-tolyl phosphite ester, etc., and the above-mentioned compounds can be used alone or in combination.

In one embodiment, the organophosphorus compound is preferably a heterocyclic aromatic phosphite compound containing a pentaerythritol diphosphite group, and it includes, for example, a structure represented by formula (1) below.

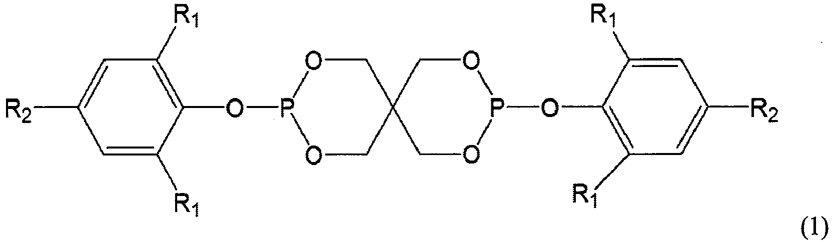

In the above formula, R₁ and R₂ each independently represent hydrogen or a C1 to C10 linear alkyl group, a C1 to C10 branched alkyl group, a C1 to C10 cyclic alkyl group, or the combination thereof; for example, R₁ and R₂ each independently hydrogen, methyl, or tert-butyl. The specific example of the organophosphorus compound is, for example but not limited to, bis(2,4-di-t-butylphenyl)pentaerythritol diphosphite, bis(2,6-di-t-butyl-4-methylphenyl)pentaerythritol-diphosphite, or bis(2,4-dicumylphenyl)pentaerythritol diphosphite.

In an embodiment, the content of the organophosphorus compound in the polymethacrylate composition is 200 ppm-900 ppm, such as 250 ppm-800 ppm or 300ppm-800 ppm. When the content of the organophosphorus compound is within 200 ppm -900 ppm , the polymethacrylate composition containing the organophosphorus compound can have a high Tg (good heat resistance), a high Td (good thermal stability), and a preferred optical performance (low yellow index and low haze). Wherein the total amount of the methacrylate series polymer and the styrene series-maleic anhydride series copolymer is 100 parts by weight.

Further, any additive may be mixed according to various purposes within a range not significantly impairing the effects of the present disclosure. The kind of these additives is not particularly limited as long as it is generally used for a resin composition or a rubber composition; for example, the additive includes an antioxidant, a thermal stabilizer, a UV absorber, a slip agent, a processing aid, a filler, a reinforcing agent, A coloring agent, an antistatic agent or other additives, and the additives are not limited to being added during the polymerization reaction, after the polymerization reaction, or during extrusion and mulling. A content of the additives is measured when the total amount of the polymer is 100 parts by weight, that is, when the total amount of the methacrylate series polymer and the styrene series-maleic anhydride series copolymer is 100 parts by weight.

### Antioxidant

The antioxidant is an additive other than the organophosphorus compound. In an embodiment, the antioxidant includes, for example but not limited to, pentaerythritol tetrakis[3-(3,5-di-tris-butyl-4-hydroxyphenyl)propionate], octadecyl-3- (3,5-di-tertiarybutyl-4-hydroxyphenyl)propionate, octadecyl β-(3,5-di-t-butyl-4-hydroxyphenyl)propionate, triethylene glycol bis(3-tert-butyl-4-hydroxy-5-methylphenyl)propionate, 3,5-di-t-butyl-4-hydroxycinnamic acid, 3,9-bis(1,1-dimethyl-2-hydroxyethyl)-2,4,8,10-tetraoxaspiro[5,5]undecane, 3,9-bis(2-(3-(3-tris-butyl-4-hydroxy-5-methylphenyl)propionyloxy)-1,1-dimethylethyl)-2,4,8,10-tetraoxaspiro(5,5)undecane, etc., and the above-mentioned antioxidants can be used alone or in combination.

In one embodiment, the antioxidant is preferably a phenolic compound containing a 2,4,8,10-tetraoxaspiro(5,5)undecyl group, and it includes, for example, a structure represented by formula (2) below.

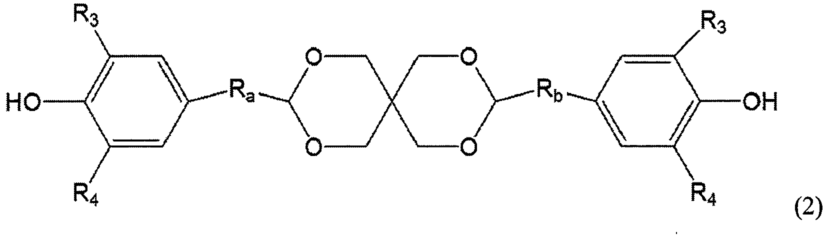

In the above formula, Rₐ and R_{b} each independently represent a C6 to C12 alkyl group, a C6 to C12 ether group, a C6 to C12 ester group, or the combination thereof; R₃ and R₄ each independently represent hydrogen or a C1 to C10 linear, branched or cyclic alkyl group. The specific example of the antioxidant is, for example but not limited to, 3,9-bis(2-(3-(3-tris-butyl-4-hydroxy-5-methylphenyl)propionyloxy)-1,1-dimethylethyl)-2,4,8,10-tetraoxaspiro(5,5)undecane.

The content of the antioxidant in the polymethacrylate composition is 500 ppm -2,000 ppm such as 700 ppm-1,700 ppm or 850 ppm-1,600 ppm. In an embodiment, if the polymethacrylate composition includes an antioxidant and an organophosphorus compound and the content ratio of antioxidant to organophosphorus compound is within a range of 1.1-10, such as 1.2-8.5 or 1.5-8, the polymethacrylate composition can have high Tg (good heat resistance) and high Td (good thermal stability) performance, and shows a better optical performance of low haze. In an embodiment, the polymethacrylate composition includes 500 ppm-2,000 ppm of the antioxidant and 200ppm-900 ppm of the organophosphorus compound.

### Thermal stabilizer

In one embodiment, a general thermal stabilizer can be used in the present disclosure. In another embodiment, the present disclosure can use a thermal stabilizer represented by the following formula (3).

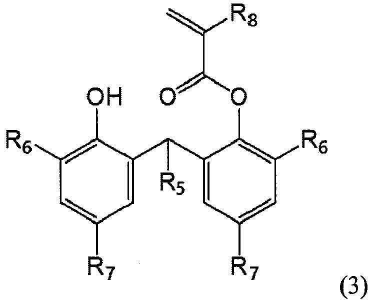

In the above formula, R₅ and R₈ each independently represent hydrogen or a methyl group, and R₆ and R₇ each independently represent a C1 to C9 linear, branched or cyclic alkyl group. R₆ is, for example, selected from tertiary butyl or tertiary amyl; and R₇ is, for example, selected from tertiary butyl, tertiary amyl, or tertiary octyl.

The content of the thermal stabilizer in the polymethacrylate composition is 500 ppm -2,000 ppm. When the content of the thermal stabilizer is within this range, it is possible to balance thermal stability and processability and control production costs. In one embodiment, the content of the thermal stabilizer in the polymethacrylate composition is 700 ppm -1,800 ppm, and in another embodiment, the content of the thermal stabilizer in the polymethacrylate composition is 900 ppm -1,600 ppm.

### UV absorber

In one embodiment, a UV (ultraviolet) absorber can be used in the present disclosure. In one embodiment, a flash point of the UV absorber can higher than the processing temperature. For example, a flash point of the UV absorber is 240 °C or higher to prevent the UV absorber from precipitate in the high temperature process for forming the optical device, and the precipitate usually causes serious mold pollution.

The UV absorber includes, for example but not limited to, 2-(4,6-bis-(2,4-dimethylphenyl)-1,3,5-triazin-2-yl)-5-(octyloxy)phenol, 2,2'-methylenebis[6-(benzotriazol-2-yl)-4-tert-octylphenol], 2-(4,6-diphenyl-1,3,5-triazin-2-yl)-5-[(hexyl)oxy]-phenol, 2,2',4,4'-tetrahydroxybenzophenone, 3-[(2-Cyano-3,3-diphenylacryloyl)oxy]-2,2-bis{[(2-cyano-3,3-diphenylacryloyl)oxy]methyl}propyl 2-cyano-3,3-diphenylacrylate (uvinul 3030), 2-(2H-benzotriazol-2-yl)-6-dodecyl-4-methylphenol, and 2-(2'-hydroxy-3',5'-dipentylphenyl)benzotriazole, etc., and the above-mentioned UV absorbers can be used alone or in combination.

The content of the UV absorber in the polymethacrylate composition is 10,000 ppm -50,000 ppm such as 15,000 ppm -40,000 ppm or 20,000 ppm -35,000 ppm. When the content of the UV absorber is within this range, the UV absorber and the composition can be uniformly mixed, the UV absorber cannot precipitate by the subsequent hot working process to cause mold pollution, and the composition can have good ultraviolet light stability. In one embodiment, if the polymethacrylate composition includes a UV absorber and an organophosphorus compound in which the content ratio of the UV absorber to the organophosphorus compound is within 10-300 such as 15-200 or 20-180, the polymethacrylate composition can have high Tg (good heat resistance) and high Td (good thermal stability) performance, and shows a better optical performance of low yellow index. In one embodiment, the polymethacrylate composition includes 10,000 ppm -50,000 ppm of the UV absorber and 200 ppm -900 ppm of the organophosphorus compound.

### Slip agent

The slip agent includes, for example but not limited to, a metal soap such as calcium stearate, magnesium stearate, lithium stearate and so on; a compound such as ethylene distearylamine, methylene distearylamine, decyl palmitate, butyl stearate, palmitate stearate, polypropionate tristearate, n-docosanoic acid, hard Fatty acid, stearyl alcohol and so on; polyethylene wax, octadecanoic acid wax, Carnuba wax, petroleum wax, etc., and the above-mentioned slip agents can be used alone or in combination.

The content of the slip agent in the polymethacrylate composition is 300 ppm-50,000 ppm.

### Processing aid

The processing aid includes, for example but not limited to a core-shell acrylate processing aid with a weight average molecular weight (Mw) of 500,000 or more so that extrusion moldability, thermoformability, and the like can be improved.

### Antistatic agent

The antistatic agent is a permanent antistatic polymer material including, for example but not limited to, a low molecular weight compound such as a tertiary amine compound or a quaternary ammonium salt compound; or a polyamine polyether such as 3-chloro-1,2-epoxypropane polymer, the above-mentioned antistatic agents can be used alone or in combination.

### Filler

The filler includes, for example but not limited to, calcium carbonate, bauxite, mica, etc., and the above-mentioned fillers can be used alone or in combination.

### Reinforcing agent

The reinforcing agent includes, for example but not limited to, glass fiber, carbon fiber, various whiskers, etc., and the above-mentioned reinforcing agents can be used alone or in combination.

### Coloring agent

The coloring agent includes, for example but not limited to, titanium oxide, iron oxide, graphite, phthalocyanine dye, etc., and the above-mentioned coloring agents can be used alone or in combination.

The use of the polymethacrylate composition of the present disclosure is not particularly limited, and it can be applied to various moldings process, such as injection molding, compression molding, extrusion molding, blow molding, thermoforming, vacuum forming, hollow molding and so on; and various finished products made by the above-mentioned molding process such as: plate, film molded products, etc. The polymethacrylate composition can be formulated according to the needs of high fluidity, high heat stability, etc.

The polymethacrylate composition can be obtained by a general mixing muller such as a Brabender plastometer, a Banbury mixer, a kneading-mixer, a roller, a single- or a twin-screw extruder, etc. Usually, after mixing and mulling by the extruder, the extrudate is cooled and granulated. The polymethacrylate composition is generally mulled at 160 °C to 280 °C, preferably 180 °C to 250 °C. Furthermore, the mixing and mulling of each components is not particularly limited in order.

The optical device according to another embodiment of the present disclosure is formed by the polymethacrylate composition as described above and has excellent optical properties of low haze and low yellow index. In an embodiment, the optical device may be an optical material with a planar structure such as an optical plate, an optical sheet, an optical film, or the like. In an embodiment, a method for preparing the optical material with the planar structure is not particularly limited herein, and the polymethacrylate composition may be melted through an extruder and then extruded into a plate-shaped, sheet-shaped or film-shaped unstretched optical plate, optical sheet or optical film. In another embodiment, a tenter may be used to laterally stretch or biaxially stretch the unstretched optical plate, optical sheet, or optical film at a temperature higher than the glass transition temperature thereof.

In one embodiment, the optical device is, for example, an optical plate having planar structure which includes a body in the form of a sheet, and the body comprises a plane. The body has a rectangular shape and is made of the above polymethacrylate composition.

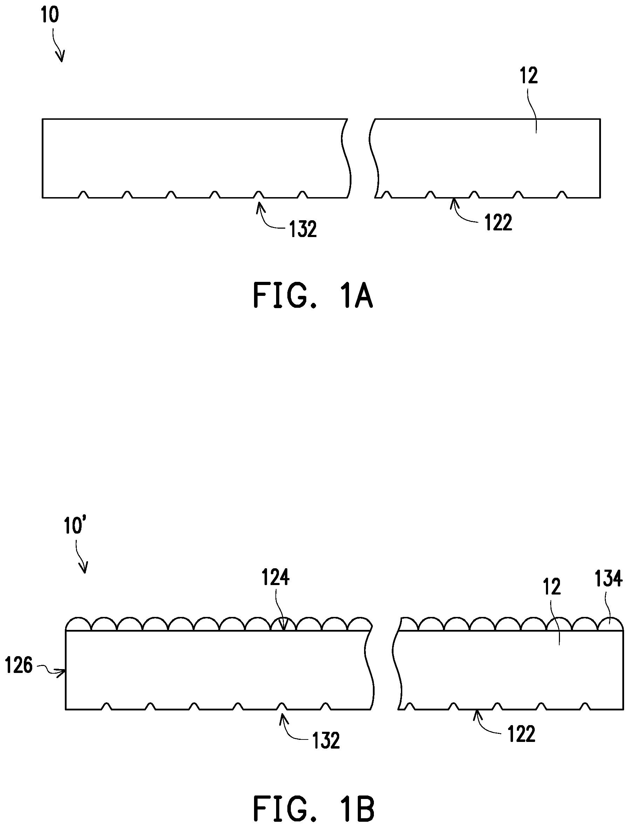

In another embodiment, the optical device is, for example, an optical plate having microstructures. Referring to FIG. 1A, it shows an optical plate 10 having microstructures. The optical plate 10 includes a body 12, the body 12 has a surface 122, and a plurality of first microstructures 132 are disposed on the surface 122. As shown in FIG. 1A, each of the first microstructures 132 of this embodiment is a concave pit structure, but it is not limited thereto. In other embodiments, each of the first microstructures 132 may be a bump structure or a structure having other shapes.

Referring to FIG. 1B, it shows yet another embodiment of the optical device in which, in addition to the first microstructures 132 of FIG. 1A, a plurality of second microstructures 134 are further disposed on other surface such as the surface 124 opposite to the surface 122 or the side surface 126 vertical to the surface 122, and the second microstructures 134 are, for example, microlens and are disposed on the surface 124. In this embodiment, each of the second microstructures 134 is semi-circular shape, but it is not limited thereto. In other embodiments, each of the second microstructures 134 may be a suitable protruding structure such as a prism or a corner pillar. Moreover, the optical device can also be an optical plate having the second microstructures 134 alone.

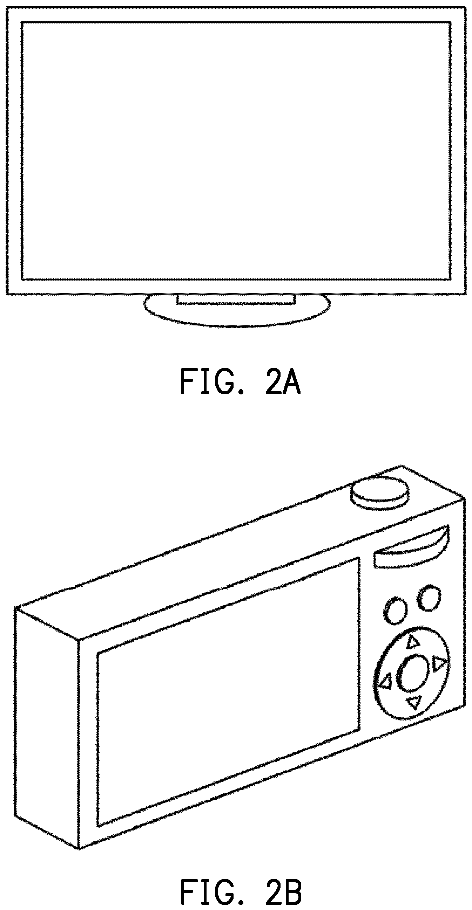

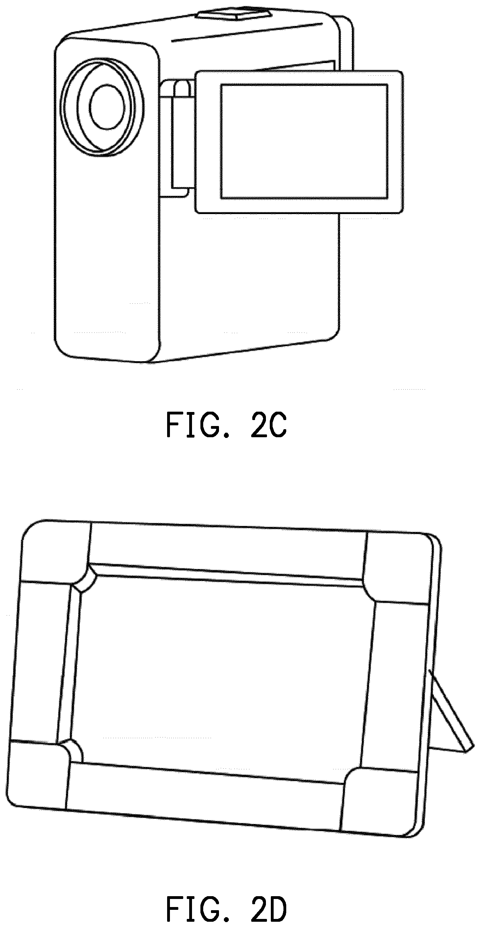

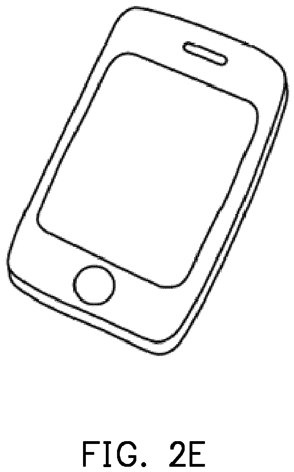

In some embodiments, the optical device can be applied in various display apparatuses. The display apparatus can be, for instance, a television (also referred to as TV or TV receiver) (as shown in FIG. 2A), digital camera (as shown in FIG. 2B), digital video camera (as shown in FIG. 2C), digital photo frame (as shown in FIG. 2D), mobile phone (as shown in FIG. 2E), notebook personal computer, mobile computer, a monitor used in, for instance, a computer, a portable game console, portable information terminal, audio reproduction apparatus, game console, and car display.

The polymethacrylate composition of the present disclosure will be described more specifically with reference to several experiments. Although the following experiments are described, materials, their amounts and ratios, processing details, processing procedures, and the like can be appropriately changed without exceeding the scope of the present disclosure. Therefore, the present disclosure should not be construed restrictively based on the experiments described below.

### <Raw Materials used in Embodiments and Comparative Embodiments>

### 1. PMMA: methacrylate series polymer.

### 1.1. Preparation of PMMA

Firstly, 95 parts by weight of methyl methacrylate, 5 parts by weight of methyl acrylate, 0.4 part by weight of n-dodecyl mercaptan, 0.08 part by weight of 2,2'-azobis-(isobutyronitrile) and 66 parts by weight of toluene were mixed, and continuously fed into a reaction tank for continuous solution polymerization reaction. The above reaction tank is a sandwich with heat medium oil circulation, and the reaction temperature was maintained at 100°C and the pressure was 600 torr. The components in the reaction tank were thoroughly stirred and uniformly mixed, and a resulting polymer solution was heated to 265°C. Thereafter, the polymer solution was devolatilized under a reduced pressure by using a continuous devolatilizer, and then was prepared into strips through the extruder. The strips were cooled and granulated to obtain polymethyl methacrylate plastic granules. The polymethyl methacrylate plastic granules contained 97 wt% of methyl methacrylate monomer unit and 3 wt% of methyl acrylate monomer unit, the weight average molecular weight (Mw) of the polymethyl methacrylate plastic granules was 100,000, and the melt flow rate (MVR) (230°C*3.8kg)= 1.9.

### 2. SMA: styrene series-maleic anhydride series copolymer.

### 2.1. Preparation of SMA1

In a 40L stirred reactor, 7,440g of maleic anhydride was added after being purged with nitrogen for 10 minutes, and the temperature was raised to 130°C, followed by a constant temperature for 30 minutes. Then, the temperature was maintained at 130°C, and a mixed solution containing 22,560g of styrene and 12g of 2,2'-azobis-(isobutyronitrile) was continuously added within 1 hour, and the temperature was lowered to 110°C after the end of the feed. The reaction was carried out at a constant temperature for 4 hours, after which the unreacted maleic anhydride was first washed away with acetone, and unreacted styrene was removed in a vacuum oven at 80°C to obtain a bulky styrene-maleic anhydride copolymer.

### 2.2. Preparation of SMA2

The preparation method was the same as that of SMA1, but the addition amount of the maleic anhydride was adjusted to 6,825g, and the addition amount of the styrene was adjusted to 32,175g.

### 2.3. Preparation of SMA3

The preparation method was the same as that of SMA1, but the addition amount of the maleic anhydride was adjusted to 7,707g, and the addition amount of the styrene was adjusted to 28,993g.

### 2.4. Preparation of SMA4

In a 40L stirred reactor, 7,840g of maleic anhydride was added after being purged with nitrogen for 10 minutes, and the temperature was raised to 150°C, followed by a constant temperature for 30 minutes. Then, the temperature was maintained at 150°C, and a mixed solution containing 24,160g of styrene and 4g of 2,2'-azobis-(isobutyronitrile) was continuously added within 1 hour, and the temperature was lowered to 130°C after the end of the feed. The reaction was carried out at a constant temperature for 6 hours, after which the unreacted maleic anhydride was first washed away with acetone, and unreacted styrene was removed in a vacuum oven at 80°C to obtain a bulky styrene-maleic anhydride copolymer.

The weight percentage of styrene series monomer unit (SM), the weight percentage of maleic anhydride series monomer unit (MAh), the ratio of the weight percentage of styrene series monomer unit to the weight percentage of maleic anhydride series monomer unit (SM/MAh), the number average molecular weight (Mn), the weight average molecular weight (Mw), and the polydispersity index (PDI) (Q) of SMA1 to SMA4 are shown in Table 1.

**Table 1**

| | SM | MAh | SM/MAh | Mn | Mw | Q |
|---|---|---|---|---|---|---|
| SMA1 | 76.80wt% | 23.20wt% | 3.31 | 37,916 | 67,250 | 1.77 |
| SMA2 | 76.40wt% | 23.60wt% | 3.24 | 37,315 | 76,899 | 2.06 |
| SMA3 | 84.10wt% | 15.90wt% | 5.29 | 46,682 | 86,894 | 1.86 |
| SMA4 | 80.10wt% | 19.90wt% | 4.19 | 46,958 | 88,890 | 1.89 |

3. Organophosphorus compound: Bis(2,6-di-tert-butyl-4-methylphenyl) pentaerythritol-diphosphite.
4. Thermal stabilizer: a thermal stabilizer represented by the formula (1) in which R₁ is methyl, R₂ and R₃ are both tertiary amyl, and R₄ is hydrogen.
5. Antioxidant: 3,9-bis(2-(3-(3-tris-butyl-4-hydroxy-5-methylphenyl)propionyloxy)-1,1-dimethylethyl)-2,4,8,10-tetraoxaspiro(5,5)undecane.
6. UV absorber: 2,2'-methylenebis[6-(benzotriazol-2-yl)-4-tert-octylphenol], and its flash point is 420.5±35.7 °C.

### [Evaluation Items]

Transmittance (T%): After the polymethacrylate compositions of Embodiments 1 to 12 and Comparative Embodiments 1 to 2 were formed into disk test pieces having a diameter of 5.5cm and a thickness of 3mm, they were measured by a Haze Meter NDH 2000N, unit: %. Based on the demand for commercially available optical films, it is generally desirable to have the transmittance being greater than 90%.

Haze (HAZE): After the polymethacrylate compositions of Embodiments 1 to 12 and Comparative Embodiments 1 to 2 were formed into disk test pieces having a diameter of 5.5cm and a thickness of 3mm, they were measured by a Haze Meter NDH 2000N, unit: %. Based on the demand for commercially available optical films, it is generally desirable to have the haze being less than 1.5.

Yellow index (YI): After the polymethacrylate compositions of Embodiments 1 to 12 and Comparative Embodiments 1 to 2 were formed into disk test pieces having a diameter of 5.5cm and a thickness of 3mm, they were measured by a computer spectrophotometer SA-2000 from Nippon Denshoku Industries Co. Ltd.

Glass transition temperature (Tg): The polymethacrylate compositions of Embodiments 1 to 12 and Comparative Embodiments 1 to 2 were measured by a differential scanning calorimeter (DSC). Unit: °C.

Thermal degradation temperature (5% weight loss temperature, Td): 5 mg of polymethacrylate composition of Embodiments 10 to 12 were taken as samples, respectively. The samples were placed in a thermogravimetric analyzer (TGA) and then analyzed in the following conditions: under a nitrogen atmosphere, the temperature was raised from 100 °C to 600 °C at a heating rate of 20 °C/min, and the temperature at 5% weight loss was measured.

### Embodiments 1 to 9

Embodiments 1 to 9 are polymethacrylate compositions prepared by mixing components according to the respective ratios listed in Table 2, and then mixing and performing extrusion granulating at 240°C in an extruder. The detection results of the haze (HAZE), yellow index (YI), transmittance (T%) and glass transition temperature (Tg) are also recorded in Table 2.

### Comparative Embodiments 1 to 2

Comparative Embodiments 1 to 2 are polymethacrylate compositions prepared according to the respective component ratios listed in Table 2 in the same manner as in Embodiments 1 to 9. The detection results of the haze (HAZE), yellow index (YI), transmittance (T%) and glass transition temperature (Tg) are also recorded in Table 2.

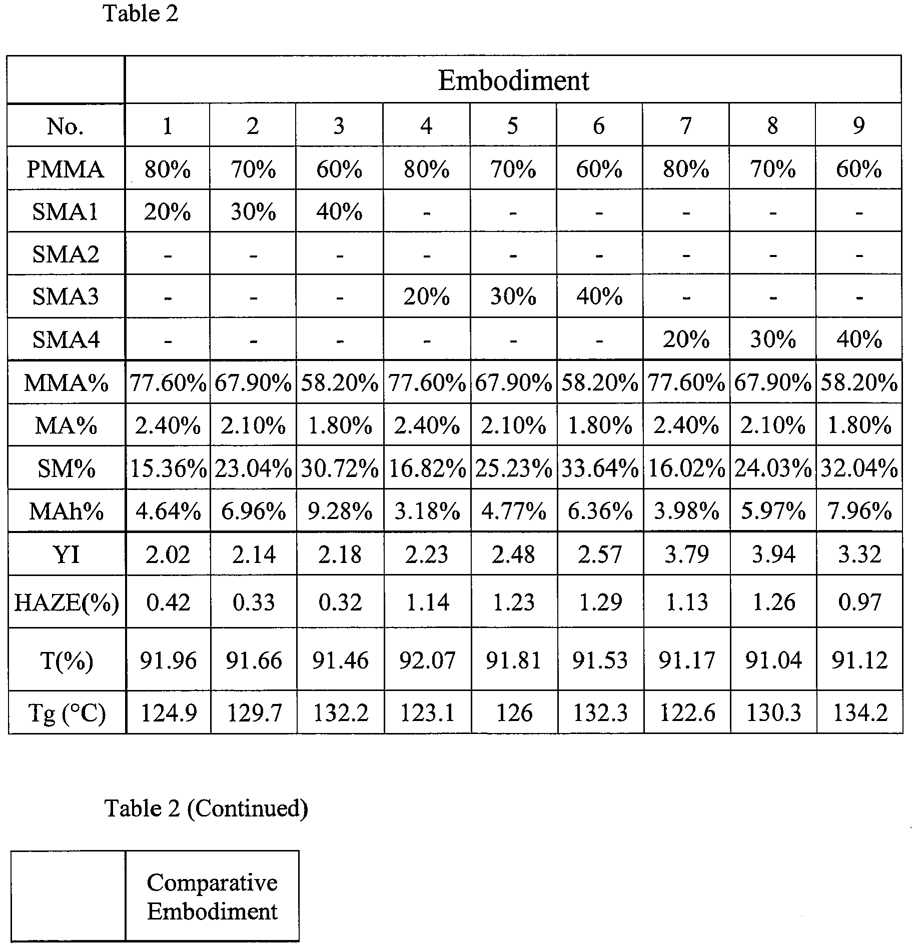

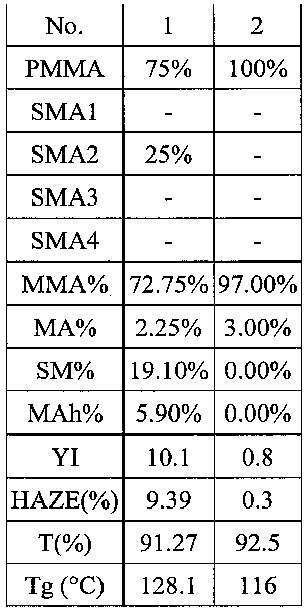

In Table 2, MMA%, MA%, SM% and MAh% are the respective percentage of methyl methacrylate monomer unit (MMA), methacrylate monomer unit (MA), styrene series monomer unit (SM) and maleic anhydride series monomer unit (MAh) in the polymethacrylate composition respectively.

According to the results of Embodiments 1 to 9 and Comparative Embodiments 1 to 2, it can be found that when the polymethacrylate composition includes 50 to 85 parts by weight of methacrylate series polymer and 15 to 50 parts by weight of styrene series-maleic anhydride series copolymer and in combination the styrene series-maleic anhydride series copolymer includes 76.5%-90% of styrene series monomer unit and 10%-23.5% of maleic anhydride series monomer unit and a range of molecular weight distribution index (PDI) of the styrene series-maleic anhydride series copolymer is from 1.5 to 2.05, the polymethacrylate composition has favorable performance in the aspects of transmittance, haze and yellow index. The styrene series-maleic anhydride series copolymer of the polymethacrylate composition in Comparative Embodiment 1 has lower content of styrene series monomer unit, and has worse performance in the aspects of HAZE and yellow index than Embodiments 1 to 9; and Comparative Embodiment 2, including no styrene series-maleic anhydride series copolymer, has favorable performance in the aspects of transmittance, haze and yellow index, but has much lower heat resistance (glass transition temperature, Tg) than Embodiments 1 to 9. Therefore, when the polymethacrylate composition includes 50 to 85 parts by weight of methacrylate series polymer and 15 to 50 parts by weight of styrene series-maleic anhydride series copolymer, the contents of the styrene series monomer unit and the maleic anhydride series monomer unit in the styrene series-maleic anhydride series copolymer are respectively controlled at 76.5wt%-90wt% and 10wt%-23.5wt%, and a range of molecular weight distribution index (PDI) of the styrene series-maleic anhydride series copolymer is from 1.5 to 2.05, the polymethacrylate composition has both favorable heat resistance (high glass transition temperature) and optical properties (high transmittance, low haze and low yellow index).

### Embodiments 10 to 12

Embodiments 10 to 12 are polymethacrylate compositions prepared by mixing PMMA and SMA1 components according to the respective ratios listed in Table 3, then mixing with thermal stabilizer, antioxidant, organophosphorus compound and UV absorber and then performing extrusion granulating at 240°C in an extruder, wherein the total amount of the methacrylate series polymer (PMMA) and the styrene series-maleic anhydride series copolymer (SMA1) is 100 parts by weight. The amounts of thermal stabilizer, antioxidant, organophosphorus compound and UV absorber listed in Table 3 is a real content result measured form polymethacrylate compositions of Embodiments 10 to 12 by using high performance liquid chromatography (HPLC). The detection results of the haze (HAZE), yellow index (YI), transmittance (T%), glass transition temperature (Tg), and thermal degradation temperature (Td) are also recorded in Table 3.

**Table 3**

| | Embodiment | | |
|---|---|---|---|
| No. | 10 | 11 | 12 |
| PMMA (parts by weight) | 28.8 | 28 | 28 |
| SMA1 (parts by weight) | 1,257 | 1,303 | 1,351 |
| Thermal stabilizer (ppm) | 1,183 | 1,289 | 1,158 |
| Antioxidant (ppm) | 0 | 336 | 478 |
| Organophosphorus compound (ppm) | 21,221 | 20,295 | 21,580 |
| UV absorber (ppm) | 28.8 | 28 | 28 |
| YI | 11 | 9.5 | 8.5 |
| HAZE (%) | 1.8 | 1.3 | 0.4 |
| T (%) | 91.1 | 91.6 | 91.9 |
| Tg (°C) | 126.1 | 127.4 | 128.7 |
| Td (°C) | 316 | 322 | 330 |

According to the results of Embodiments 10 to 12, it can be found that Embodiments 11 and 12 with 200 ppm -900 ppm of the organophosphorus compound can maintain better heat resistance (higher Tg) and better thermal stability (higher Td). In other words, the presence of the organophosphorus compound can increase the thermal degradation temperature of the composition. Therefore, the styrene-maleic anhydride copolymer (SMA) is less likely to be opened, so that high heat resistance can be maintained. Moreover, Embodiments 11 and 12 containing 200 ppm -900 ppm of the organophosphorus compound and 10,000 ppm -50,000 ppm of the UV absorber have a good yellow index (YI).

In addition, as shown from Table 3, Embodiments 11 and 12 containing 200 ppm -900 ppm of the organophosphorus compound and 500 ppm -2,000 ppm of the antioxidant, and thus it has better haze performance and high transmittance under the action of the organophosphorus compound and the antioxidant.

### [Symbol Description]

- 10, 10': optical plate
- 12: body
- 122, 124: surface
- 126: side surface
- 132: first microstructure
- 134: second microstructure

## Claims

1. A polymethacrylate composition, including:
50 to 85 parts by weight of methacrylate series polymer, wherein the methacrylate series polymer includes methacrylate series monomer unit and acrylate series monomer unit and has a weight average molecular weight in a range between 20,000 and 200,000; and
15 to 50 parts by weight of styrene series-maleic anhydride series copolymer, wherein a range of molecular weight distribution index (PDI) of the styrene series-maleic anhydride series copolymer is from 1.5 to 2.05 and, the styrene series-maleic anhydride series copolymer includes 76.5wt%-90wt% of styrene series monomer unit, 10wt%-23.5wt% of maleic anhydride series monomer unit, and 0-13.5wt% of second copolymerizable monomer unit.

2. The polymethacrylate composition according to claim 1, wherein the methacrylate series polymer includes 92wt%-99wt% of the methacrylate series monomer unit, 1wt%-8wt% of the acrylate series monomer unit, and 0-7wt% of first copolymerizable monomer unit, and a weight average molecular weight (Mw) of the methacrylate series polymer is between 50,000 and 150,000.

3. The polymethacrylate composition according to claim 2, wherein the first copolymerizable monomer unit is at least one selected from a group consisting of unsaturated carboxylic series monomer unit, maleimide series monomer unit, propenyl-containing compound monomer unit, vinyl-containing compound monomer unit and styrene series monomer unit.

4. The polymethacrylate composition according to any of claims 1 to 3, wherein the ratio of the weight percentage of the styrene series monomer unit to the weight percentage of the maleic anhydride series monomer unit in the styrene series-maleic anhydride series copolymer is between 3 and 9.2.

5. The polymethacrylate composition according to any of claims 1 to 4, wherein a weight average molecular weight (Mw) of the styrene series-maleic anhydride series copolymer is between 60,000 and 100,000.

6. The polymethacrylate composition according to any of claims 1 to 5, wherein the second copolymerizable monomer unit is selected from at least one of a group consisting of methyl methacrylate monomer unit, ethyl methacrylate monomer unit, propyl methacrylate monomer unit, n-butyl methacrylate monomer unit, amyl methacrylate monomer unit, cyclohexyl methacrylate monomer unit, heptyl methacrylate monomer unit, n-octyl methacrylate monomer unit, octadecyl methacrylate monomer unit, phenyl methacrylate monomer unit, benzyl methacrylate monomer unit, 2-ethylhexyl methacrylate monomer unit, methyl acrylate monomer unit, ethyl acrylate monomer unit, propyl acrylate monomer unit, butyl acrylate monomer unit, amyl acrylate monomer unit, n-hexyl acrylate monomer unit, cyclohexyl acrylate monomer unit, heptyl acrylate monomer unit, dodecyl acrylate monomer unit, phenyl acrylate monomer unit, benzyl acrylate monomer unit, 2-ethylhexyl acrylate monomer unit, and octadecyl acrylate monomer unit.

7. The polymethacrylate composition according to any of claims 1 to 6, further comprising 200 ppm -900 ppm of an organophosphorus compound.

8. The polymethacrylate composition according to claim 7, further comprising an antioxidant and a content ratio of the antioxidant to the organophosphorus compound is within 1.1-10.

9. The polymethacrylate composition according to any of claims 1 to 7, further comprising 500 ppm-2,000 ppm of an antioxidant.

10. The polymethacrylate composition according to any of claims 1 to 9, further comprising 500 ppm-2,000 ppm of a thermal stabilizer.

11. The polymethacrylate composition according to any of claims 1 to 10, further comprising 10,000 ppm-50,000 ppm of an UV absorber, and a flash point of the UV absorber is 240°C or higher.

12. The polymethacrylate composition according to claim 11, wherein the UV absorber is selected from at least one of a group consisting of 2-(4,6-bis-(2,4-dimethylphenyl)-1,3,5-triazin-2-yl)-5-(octyloxy)phenol, 2,2'-methylenebis[6-(benzotriazol-2-yl)-4-tert-octylphenol], 2-(4,6-diphenyl-1,3,5-triazin-2-yl)-5-[(hexyl)oxy]-phenol, 2,2',4,4'-tetrahydroxybenzophenone, 3-[(2-Cyano-3,3-diphenylacryloyl)oxy]-2,2-bis{[(2-cyano-3,3-diphenylacryloyl)oxy]methyl}propyl 2-cyano-3,3- diphenylacrylate, 2-(2H-benzo Triazol-2-yl)-6-dodecyl-4-methylphenol, and 2-(2'-hydroxy-3',5'-dipentylphenyl)benzotriazole.

13. An optical device, being made from the polymethacrylate composition according to any of claims 1 to 12.

14. The optical device according to any of claim 13, wherein the optical device is at least one selected from the group consisting of an optical plate, an optical sheet, and an optical film.

15. A display apparatus, comprising:
the optical device according to any of claims 13 to 14,
wherein the display apparatus is at least one selected from the group consisting of a television, a digital camera, a digital photo frame, a mobile phone, a notebook personal computer, a mobile computer, a monitor used in a computer, a portable game console, a portable information terminal, an audio reproduction apparatus, a game console, and a car display.
